# EUROPEAN PATENT SPECIFICATION

(11) **EP 1 855 334 B1**
(45) Date of publication and mention of the grant of the patent: **07.04.2021**
(21) Application number: 07251938.2
(22) Date of filing: 10.05.2007
(51) Int. Cl.: H01M 4/36, H01M 4/48, H01M 4/58, H01M 10/0525, H01M 4/62, H01M 4/131, H01M 4/136, H01M 4/02

(54) **Cathode material for manufacturing a rechargeable battery**
Kathodenmaterial zur Herstellung einer wiederaufladbaren Batterie
Matériau à cathode pour fabriquer une batterie rechargeable

(30) Priority: 11.05.2006 CN 200610080365
(43) Date of publication of application: 14.11.2007
(73) Proprietor: Aquire Energy Co. Ltd., Taipei City (TW)
(72) Inventor: Yang, Chih-Wei, Taoyuan Hsien (TW); Liu, Wen-Ren, Taoyuan Hsien (TW)
(74) Representative: Swan, Elizabeth Mary

(56) References cited:
- WO-A-2006/065605
- WO-A1-2006/018514
- JP-A- 2006 066 081
- US-A1- 2002 086 214
- US-A1- 2004 157 126
- US-A1- 2004 253 518
- US-A1- 2006 147 809
- EFTEKHARI A: "ELECTROCHEMICAL DEPOSITION AND MODIFICATION OF LIFEPO4 FOR THE PREPARATION OF CATHODE WITH ENHANCED BATTERY PERFORMANCE" JOURNAL OF THE ELECTROCHEMICAL SOCIETY, ELECTROCHEMICAL SOCIETY. MANCHESTER, NEW HAMPSHIRE, US, vol. 151, no. 11, 1 January 2004 (2004-01-01), pages A1816-A1819, XP002498457 ISSN: 0013-4651 [retrieved on 2004-10-07]
- WANG G X ET AL: "SYNTHESIS AND CHARACTERIZATION OF LIFEPO4 AND LIUTI0.01FE0.99PO4 CATHODE MATERIALS" JOURNAL OF THE ELECTROCHEMICAL SOCIETY, ELECTROCHEMICAL SOCIETY. MANCHESTER, NEW HAMPSHIRE, US, vol. 153, no. 1, 1 January 2006 (2006-01-01), pages A25-A31, XP002498456 ISSN: 0013-4651 [retrieved on 2005-11-22]
- YANG ET AL: "Synthesis and characterization of LiFePO"4 cathode material dispersed with nano-structured carbon", ELECTROCHIMICA A, ELSEVIER SCIENCE PUBLISHERS, BARKING, GB, vol. 51, no. 1, 5 October 2005 (2005-10-05), pages 166-171, XP005088838, ISSN: 0013-4686, DOI: 10.1016/J.ELECTACTA.2005.04.013

## Description

This invention relates tp a cathode material for manufacturing a rechargeable battery, more particularly to a cathode material for manufacturing a rechargeable battery including an electrochemical compound and a conductive metal oxide. This invention also relates to a rechargeable battery including a cathode made from the cathode material.

Along with diversified development of electronic products, there is increasing need for portable power supplies. For example, electronic consumer products, medical devices, motorcycles, automobiles, and power tools and the like require a portable power supply for power source. For current portable power supplies, rechargeable batteries are relatively popular. Since lithium rechargeable batteries have a high ratio of volume to capacity, pollution-free and recyclable charge /discharge properties, and no memory effect, it has a great development potential in the future.

Additionally, a cathode material used for manufacturing the cathode plays an important role in the performance of the rechargeable battery. Since lithium ferrous phosphate-based compound, which has an olivine or NASICON structure, is environmentally benign, relatively stable and resourceful, and has a relatively high specific capacity, and relatively good charge/discharge cycling performance and thermostability, it has been evaluated to be a good candidate as the cathode material with greatest development potential.

However, since conductivity and lithium ion diffusion rate of lithium ferrous phosphate are relatively low, the specific capacity will decrease at a high charge/discharge rate so that use of such lithium ferrous phosphate in high current density applications is restricted.

In order to improve the conductivity of such lithium ferrous phosphate, it has been proposed to reduce particle size of lithium ferrous phosphate or add conductive material to lithium ferrous phosphate. For example, Japanese Patent Publication No. 2003-323892 (hereinafter referred to as the '892 publication) discloses a method, for making a cathode material, which involves mixing lithium ferrous phosphate powders, conductive metal particles and a polar solvent in a hermetic container at a temperature ranging from 100 to 250°C. Since the method of the 892 publication is required to be conducted at a relatively high temperature and pressure, and since the activity of the conductive metal particles is relatively high, it is difficult to control operating conditions in the method of the 892 publication and hence, production cost of the method is relatively expensive.

Another approach to mix conductive material with the lithium ferrous phosphate involves addition of organic material to a reactant mixture containing lithium ferrous phosphate. For example, in a solid-phase mixing process, lithium salt, iron salt, phosphate and the organic material are mixed, and then heated. The lithium salt, iron salt, and phosphate are formed into lithium ferrous phosphate powders, while the organic material is pyrolyzed to produce alkane and alkene gases, and conductive carbonaceous materials that are scattered in the lithium ferrous phosphate powders. However, the pyrolyzed products, i.e., alkane and alkene gases, cause environmental pollution and raise environmental concerns. Accordingly, this method is not recommended. Further prior art is represented e.g. by US2006134527, (XP002498457:) EFTEKHARI A: "ELECTROCHEMICAL DEPOSITION AND MODIFICATION OF LIFEPO4 FOR THE PREPARATION OF CATHODE WITH ENHANCED BATTERY PERFORMANCE", JOURNAL OF THE ELECTROCHEMICAL SOCIETY, ELECTROCHEMICAL SOCIETY. MANCHESTER, NEW HAMPSHIRE, US, vol. 151, no. 11, 1 January 2004 (2004-01-01), pages A1816 - A1819, US2004253518, WO0153198, (XP002498456:) WANG G X ET AL: JOURNAL OF THE ELECTROCHEMICAL SOCIETY, ELECTROCHEMICAL SOCIETY. MANCHESTER, NEW HAMPSHIRE, US, vol. 153, no. 1, 1 January 2006 (2006-01-01), pages A25 - A31, US7909893, US2006147809, US2004157126, (XP005088838:) YANG ET AL: "Synthesis and characterization of LiFePO4 cathode material dispersed with nano-structured carbon", ELECTROCHIMICA A, ELSEVIER SCIENCE PUBLISHERS, BARKING, GB, vol. 51, no. 1, 5 October 2005 (2005-10-05), pages 166 - 171, or JP2006066081.

Therefore, there is still a need in the art to provide a cathode material that can satisfy electrochemical properties and that can be produced by an economical and environmental friendly method.

Therefore, the objective of the present invention is to provide a cathode material that can avoid the aforesaid problems encountered in the prior art.

According to one aspect of this invention, a cathode material includes an electrochemical compound having one of olivine and NASICON structures, and a conductive metal oxide.

According to another aspect of this invention, a rechargeable battery includes an anode, an electrolyte, and a cathode. The cathode is made from a cathode material that includes an electrochemical compound having one of olivine and NASICON structures, and a conductive metal oxide.

The invention according to the above aspects is defined in the appended claims. Other features and advantages of the present invention will become apparent in the following detailed description of the preferred embodiments of this disclosure (including embodiments according to the presently claimed invention, as well as further embodiments preserved as illustrative for better understanding the invention, its context and/or further aspects useful in combination with the invention), with reference to the accompanying drawings, in which:
Fig. 1 is an analytical transmission electron microscope (AEM) photograph to illustrate morphology of a cathode material made from Example (illustrative);
Fig. 2 is an analytical transmission electron microscope (AEM) photograph to illustrate morphology of a cathode material made from Example 2 (illustrative);
Fig. 3 is an analytical transmission electron microscope (AEM) photograph to illustrate morphology of a cathode material made from Example 3 (illustrative);
Fig. 4 is an analytical transmission electron microscope (AEM) photograph to illustrate morphology of a conventional cathode material made from comparative Example 1;
Fig. 5 shows a differential capacity (dQ/dV) versus voltage (V) plot for a rechargeable battery with a cathode made from a cathode material obtained from Example 4 (illustrative); invention;
Fig. 6 shows a differential capacity (dQ/dV) versus voltage (V) plot for a rechargeable battery with a cathode made from the conventional cathode material obtained from comparative Example 1;
Fig. 7 shows a specific capacity; versus voltage plot for a rechargeable battery with a cathode made from a cathode material obtained from Example 5 of this invention;
Fig. 8 shows a specific capacity, versus voltage plot for a rechargeable battery with a cathode made from a cathode material obtained from comparative Example 2; and
Fig. 9 shows a specific capacity versus voltage plot for a rechargeable battery with a cathode made from a cathode material obtained from Example 6 of this invention.

According to this invention, a cathode material includes an electrochemical compound having one ,of olivine and NASICON structures, and a conductive metal oxide. The electrochemical compound is in the form of powdery particles, and the conductive metal oxide is attached to the powdery particles of the electrochemical compound. More preferably, each of the powdery particles of the electrochemical compound is enclosed by the conductive metal oxide that has a particle size smaller than that of the powdery particles of the electrochemical compound.

In the cathode material according to this invention, the electrochemical compound has a formula of A₃ₓMl_{2y}(PO₄)₃ and the conductive metal oxide has a formula of M2ₐO_{b}, in which A represents at least one metal element selected from the group consisting of Groups IA, IIA and IIIA and combinations thereof; each of M1 and M2 independently represents at least one metal element selected from the group consisting of Groups IIA and IIIA, transition elements, and combinations thereof; and 0≦x≦ 1.2, 1.2≦y≦1.8, 0<a≦7, and 0<b≦12.

Preferably, in the formula A₃ₓM1_{2y}( PO₄)₃ of the electrochemical compound and the formula of M2ₐO_{b} of the conductive metal oxide, the element A is at least one selected from the group consisting of Li, Na, K, Be, Mg, B, Al, and combinations thereof, and each of M1 and M2 is independently at least one selected from the group consisting of Sc, Ti, V, Cr, Mn, Fe, Co, Ni, Cu, Zn, Y, Zr, Nb; Mo, Be, Mg, Ca, Sr, B, Al, Ga, In, Si, Ge, Sn, and combinations thereof.

More preferably, the electrochemical compound is lithium ferrous phosphate.

According to this disclosure, the conductive metal oxide is selected from the group consisting of ZnAlO_{z} which the subscript z represents the number of oxygen atoms for balancing with valences of zinc and aluminum atoms, magnesium oxide, titanium oxide, zinc oxide, vanadium oxide, copper oxide, alumina, silicon oxide, cobalt oxide, nickel oxide, and manganese oxide, wherein according to the presently claimed invention, the conductive metal oxide is selected from ZnAlO_{z} or copper oxide.

Amount of the conductive metal oxide included in the cathode material can be adjusted according to the desired properties or application of the cathode material. According to the present invention, the conductive metal oxide is present in an amount ranging from 0.1 to 5% by weight based on total weight of the cathode material.

According to the present invention, the cathode material further includes a carbonaceous material. The carbonaceous material may be conductive or non-conductive. According to the present invention, the carbonaceous material is present in an amount ranging from 0.1 to 5% by weight based on total weight of the cathode material. ,

Particularly, in the cathode material where the conductive metal oxide is (as likewise required by the present invention as mentioned above) attached to the powdery particles of the electrochemical compound, each of the powdery particles of the electrochemical compound is preferably enclosed by a mixture of the conductive metal oxide and the carbonaceous material.

The cathode material of this invention can be prepared by one of the following processes 1 to 3.

### Process 1

A solution including A ions, M1 ions_{,} and PO₄³⁺ and M2 oxide is prepared. The resulting mixture is filtered or dried so as to formsolidpowders. The solid powders are subsequently heated at a temperature ranging from 50°C to 900°C according to properties of M2 oxide to obtain a cathode material that includes powdery particles of the electrochemical compound A₃ₓM1_{2y}(PO₄)₃ and M2 oxide attached to the powdery particles of the electrochemical compound A₃ₓM1_{2y} (PO₄)₃.

### Process 2

M2 salt is added to a solution containing A ions, M1 ions, and PO₄³⁺. The pH value of the solution is adjusted so as to form M2 hydroxide and then to convert M2 hydroxide into M2 oxide. The resultant mixture is filtered or dried and is subsequently heated in a manner, similar to that described in process 1 so as to obtain a cathode material that includes powdery particles of the electrochemical compound A₃ₓM1_{2y}(PO₄)₃ and M2 oxide attached to the powdery particles of the electrochemical compound A₃ₓM1_{2y}(PO₄)_{3.}

### Process 3

First, powdery particles of the electrochemical compound A₃ₓM1_{2y}(PO₄)₃ and a solution containing M2 salt are separately prepared. The powdery particles of the electrochemical compound A₃ₓM1_{2y}(PO₄)₃ is subsequently added to the solution containing M2 salt. The resultant mixture is then subjected to pH adjustment, filtering or drying, and heating treatments in a manner similar to those described in process 2.

In addition, adjustment of the pH value of the solution in the above processes is preferably conducted through addition of ammonia solution.

The cathode material of this invention is useful for making a cathode of a rechargeable battery. Methods suitable for making the cathode are known in the art and can be properly chosen by a skilled artisan.

(In the following Examples (1-13), Examples 5,6,12 are according to the presently claimed invention. The remaining Examples are (preserved as) illustrative for better understanding the invention, its context and/or further aspects useful in combination with the invention).

### Examples

### Example 1

230 g of phosphoric acid and 52 g of citric acid were mixed and were dissolved in 600 ml of deionized water to form an acidic solution. 110 g of iron powders were added into and were dissociated in the acidic solution so as to form ferric phosphate and ferrous phosphate in the acidic solution. After the iron powders were dissociated completely, 84 g of lithium hydroxide was added to the acidic solution, and the resultant mixture was subsequently placed in a ball grinding mill for pulverizing and dispersing the mixture. After the mixture was uniformly dispersed, 0.8 g of light magnesium oxide was subsequently added to the ball grinding mill for pulverizing the mixture again so as to obtain a uniformly dispersed mixture.

The mixture was subsequently spray-dried so as to form fine powders. The fine powders were-placed in an alumina crucible which was placed in a furnace chamber. Temperature of the furnace chamber was raised to 800°C at a rate of 5 °C/min, and the fine powders were maintained at 800°C, under a nitrogen atmosphere for 8 hours . A powdery cathode material containing lithium ferrous phosphate, magnesium oxide, and carbonaceous material was obtained (LiFePO₄/MgO/C).

### Example 2

A powdery cathode material containing lithium ferrous phosphate, titanium oxide, and a carbonaceous material was obtained (LiFePO₄/TiO₂/C) in a' manner similar to that of Example 1 except that magnesium oxide was replaced with 1.6 g of titanium oxide.

### Example 3

A powdery cathode material containing lithium ferrous phosphate, vanadium oxide, and a carbonaceous material was obtained (LiFePO₄/V₂O₅/C) in a manner similar to that of Example 1 except that magnesium oxide was replaced with 3.6 g of vanadium oxide.

### Example 4

4050 g of phosphoric acid and 625 g of citric acid were mixed and were dissolved in 15 liters of deionized water to form an acidic solution. 1080 g of iron powders were added into and were dissociated in the acidic solution so as to form ferric phosphate and ferrous phosphate in the acidic solution. After the iron powders were dissociated completely, 485g of zinc chloride was added into and dispersed in the acidic solution with agitation by a mixer. 1500 g of lithium hydroxide was dissolved in 15 liters of water so as to form a basic solution. The basic solution was then added into the acidic solution. The pH value of the combined solution was adjusted to 8.5 through addition-of ammonia water. By this time, zinc chloride was dissociated to form zinc hydroxide (Zn(OH)₂)₂ due to neutralization. In addition, since neutralization is an exothermic reaction, zinc hydroxide thus formed was subsequently converted to zinc oxide (ZnO) by the heat generated from the neutralization.

Next, the combined solution was spray-dried so as to form fine powders. The fine powders were placed in an alumina crucible which was placed in a furnace chamber where carbon powders were placed. Temperature of the furnace chamber was raised to 800°C at a rate of 5°C/min, and the fine powders were maintained at 800°C, under a nitrogen atmosphere for 8 hours. A powdery cathode material containing lithium ferrous phosphate, zinc oxide, and carbonaceous material was obtained (LiFePO₄/ZnO/C).

### Example 5

2880 g of phosphoric acid and 313 g of citric acid were mixed and were dissolved in 10, liters of deionized water to form an acidic solution. 1396 g of iron powders were added into and were dissociated in the acidic solution so as to form ferric phosphate and ferrous phosphate. Addition of citric acid can accelerate dissociation of the iron powders and formation of ferric phosphate and ferrous phosphate. 1049 g of lithium hydroxide was dissolved in 10 liters of water so as to form a non-acidic solution. The non-acidic solution was then added into the acidic solution. The combined solution was subsequently spray-dried to form fine powders.

The fine powders were placed in an alumina crucible, and the crucible was placed in a furnace chamber. Temperature of the furnace chamber was raised to 700°C at a rate of 5 °C/min, and the fine powders were maintained at 700°C under a nitrogen atmosphere for 8 hours. Powdered lithium ferrous phosphate was formed.

1.4 g of zinc chloride and 1.2 g of aluminum chloride were dissolved in 150 ml of deionized water, and the solution thus obtained was added with lithium ferrous phosphate powders to form a slurry. 1.5 ml of ammonia solution was added into the slurry, and the pH value of the slurry was changed from about 4.5 to about 8.5. The slurry was then filtered. The filtered cake was placed in an alumina crucible, and the crucible was placed in a furnace chamber. Temperature of the furnace chamber was raised to 800°C at a rate of 5 °C/min, and the filtered cake was maintained at 800°C, under a nitrogen atmosphere for 8 hours . A powdery cathode material containing lithium ferrous phosphate, zinc aluminum oxide, and carbonaceous material was obtained (LiFePO₄/ZnAlO_{z}/C) .

### Example 6

11.5 g of phosphoric acid, 1 g of citric acid, and 1 g of sucrose were dissolved in 100 ml of deionized water to form an acidic solution. 5. 6 g of iron powders were added into and were dissociated in the acidic solution so as to form ferric phosphate and ferrous phosphate. After the iron powders were completely dissociated, 0.72 g of copper nitrate was added into and mixed with the acidic solution. 4.2 g of lithium hydroxide was dissolved in 100 ml of water so as to form a non-acidic solution which was then added into the acidic solution to conduct neutralization. By this time, the pH value of the combined solution was slightly lower than 7. Then, the pH value of the combined solution was adjusted to about 8 through addition of ammonia water. The combined solution was dried after mixing so as to form fine powders. The fine powders were placed in an alumina crucible, and the crucible was placed in a furnace chamber where carbon powders were placed. Temperature of the furnace chamber was raised to 800°C at a rate of 5°C/min, and the fine powders were maintained at 800°C under a nitrogen atmosphere for 8 hours. The furnace chamber was subsequently cooled to room temperature. A powdery cathode material containing lithium ferrous phosphate, copper oxide, and carbonaceous material was obtained (LiFePO₄/CuO/C).

### Examples 7 to 13

Powdery cathode materials containing lithium ferrous phosphate, various metal oxides., and carbonaceous material were obtained in a manner similar to that of Example 1 except that magnesium oxide was separately replaced with aluminum oxide (Example 7, Al₂O₃, 2g), silicon oxide (Example 8, SiO₂, 1.2g), zinc oxide (Example 9, ZnO, 1.6g), cobalt oxide (Example 10, Co(NO₃)₂·6H₂O, 5.8g), nickel oxide (Example 11, Ni (NO₃)₂·6H₂O, 5.8g), copper oxide (Example 12, CuO, 1.6g), and manganese oxide (Example 13, Mn(NO₃)₂·6H₂O, 5.74g).

In Examples 1 to 13, the carbonaceous material included in the powdery cathode materials obtained from Examples 4 and 6 is conductive, while the carbonaceous material included in the powdery cathode materials obtained from Examples 1 to 3, 5, and 7 to 13, which is obtained from citric acid for iron dissociation, has a non-conductive sp³ structure. Hence, the effect of metal oxide on electrochemical properties of lithium ferrous phosphate can be measured.

### Comparative Examples

### Comparative Example 1

4.196 g of lithium hydroxide, 17.99 g of ferrous oxalate and 11.53 g of phosphate were added into 200 ml of deionized water to form a solution. The solution was dried after being mixed thoroughly so as to form fine powders. The fine powders were placed in an alumina crucible, and the crucible was placed in a furnace chamber. Temperature of the furnace chamber was raised to 800°C at a rate of 5°C/min, and the fine powders were maintained at 800°C under a nitrogen atmosphere for 8 hours. The temperature of the furnace chamber was then cooled to room temperature. Powdered lithium ferrous phosphate was obtained-

### Comparative Example 2

50 g of the fine powders obtained from Example 5 were placed in an alumina crucible, and the crucible was placed in a furnace chamber. Temperature of the furnace chamber was raised to 800°C at a rate of 5°C/min, and the fine powders were maintained at 800°C under a nitrogen atmosphere for 8 hours. Powdered lithium ferrous phosphate was obtained.

### PROPERTY MEASUREMENT

### Analytical Transmission Electron Microscope (AEM) Observation

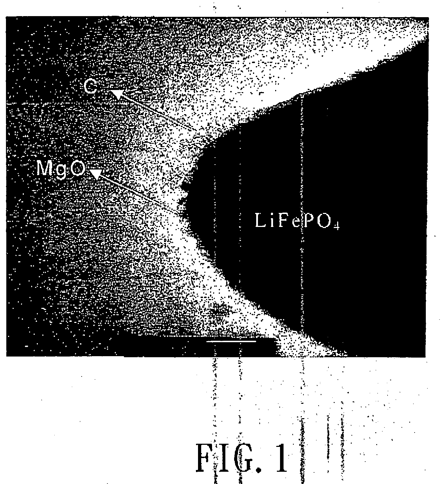

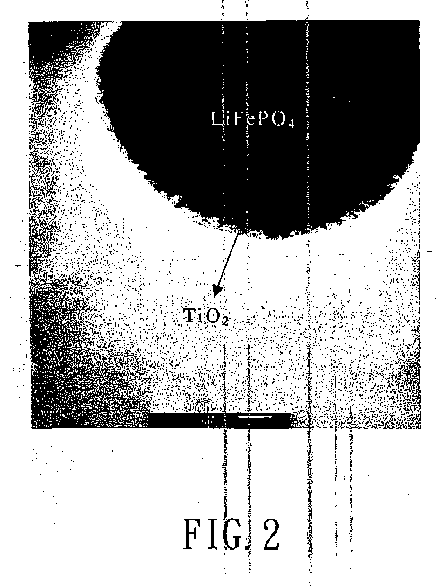

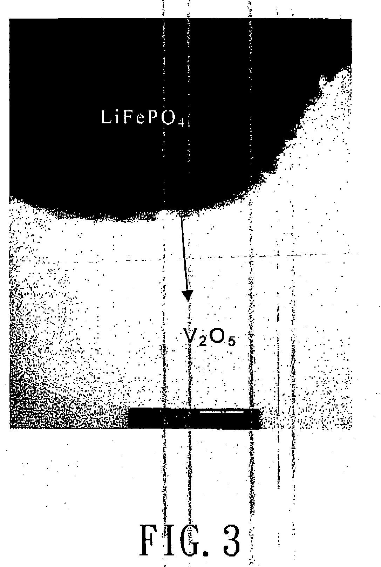

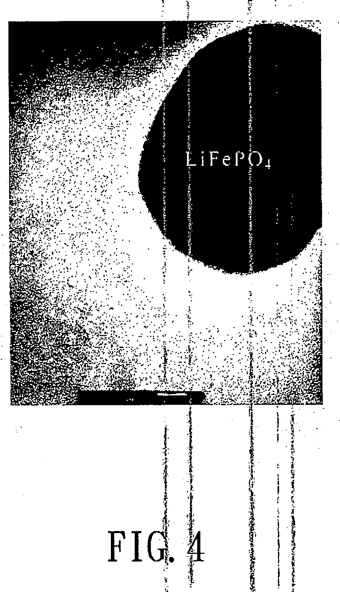

A portion of each of the powdery cathode materials obtained from Examples 1 to 3 arid a portion of the powdered lithium ferrous phosphate obtained from comparative Example 1 are separately dispersed in deionized water so as to separately form samples 1 to 4. Each of the samples 1 to 4 was subsequently placed in a standard copper carrier of an analytical transmission electron microscope (AEM, Model No. JEM-3010, JEOL Ltd.) and analyzed under vacuum. Photographs of the samples 1 to 4 obtained from TEM are shown in Figs. 1 to 4 and have a scale bar of 20 nm.

Referring to Figs. 1 to 3, each of the powdery cathode materials obtained from Examples 1 to 3, i.e. the cathode materials of this invention, has a structure of metal oxide (i.e. MgO, TiO₂, or V₂O₅) attached to the powdery particles of lithium ferrous phosphate, whereas the powdered lithium ferrous phosphate obtained from comparative Example 1 has no foreign particulate substance attached thereto. Fig. 1 shows that the powdery cathode material obtained from Example 1 was enclosed by the metal oxide, MgO; and the carbonaceous material.

### Charge/discharge test

The powdery cathode material obtained from Example 1 was evenly mixed with carbon black and polyvinylidene fluoride in a weight ratio of 80:10:10to form a mixture. The mixture was then coated on an aluminum foil and was dried to produce a cathode specimen. The cathode specimen was combined with lithiummetal to form a 2032 type button rechargeable battery. Charge/discharge tests were performed on the button rechargeable battery thus formed using a Maccor Series 4000 Automated Test System (Maccor Inc. , Tulsa, Oklahoma, U.S.A.) . The applied charge/discharge voltage ranged from 2.8 V to 4.0 V, the charge/discharge rate was set to 0.2C, and the number of charge/discharge cycles was set to ten. Capacity values of the battery at the first charge/discharge cycle and the tenth charge/dischargecycle were determined.

Subsequently, the charge/discharge test was also performed on the button rechargeable batteries including the cathodes separately made from the powdery cathode materials obtained from Examples 2 to 13 and the powdered lithium ferrous phosphate obtained from comparative Examples 1 and 2.

The capacity values of the batteries having the cathodes separately made from the cathode materials obtained from Examples 1-3 and 5-13 and the battery having the cathode made from the powdered lithium.ferrous phosphate obtained from comparative Example 2 at the first and tenth charge/discharge cycles are listed in the following Table 1.

**Table 1**

| | Metal oxide | Capacity at first charge/ discharge cycle at 0.2C | Capacity at tenth charge/ discharge cycle at 0.2C |
|---|---|---|---|
| | | (mAh/g) | (mAh/g) |
| Example 1 | MgO | 131 | 132 |
| Example 2 | TiO₂ | 144 | 146 |
| Example 3 | V₂O₅ | 141 | 143 |
| Example 5 | ZnAlO_{z} | 105 | 101 |
| Example 6 | CuO | 142 | 145 |
| Example 7 | Al₂O₃ | 97 | 100 |
| Example 8 | SiO₂ | 106 | 115 |
| Example 9 | ZnO | 117 | 118 |
| Example 10 | CoO | 118 | 125 |
| Example 11 | NiO | 132 | 139 |
| Example 12 | CuO | 149 | 145 |
| Example 13 | MnO | 150 | 155 |
| Comparative Example 2 | - | 78 | 68 |

From the results shown in Table 1, the capacity values determined for the cathodes made from the powdery cathode materials of Examples 1 to 3 and 5 to 13 are higher than that of the cathode made from the lithium ferrous phosphate powders of comparative Example 2, even after ten charge/discharge cycles. This demonstrates that inclusion of metal oxide in the cathode material of this invention results in an increase in the capacity of the cathode made therefrom. In addition, from the results obtained for Examples 6 and 12, it appears that the preparation process has substantially no effect on the capacity of the cathode material thus made.

### Electrochemical reversibility

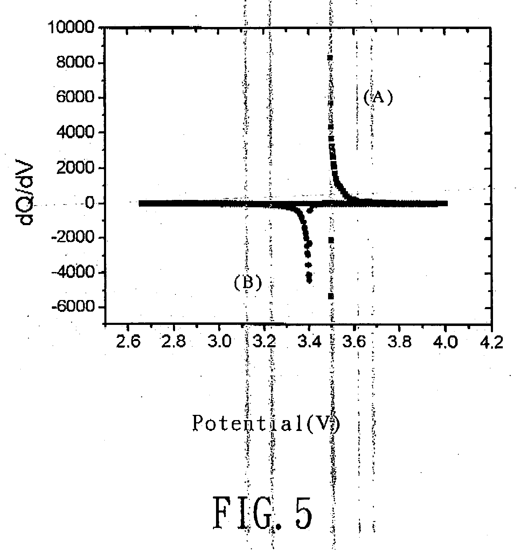

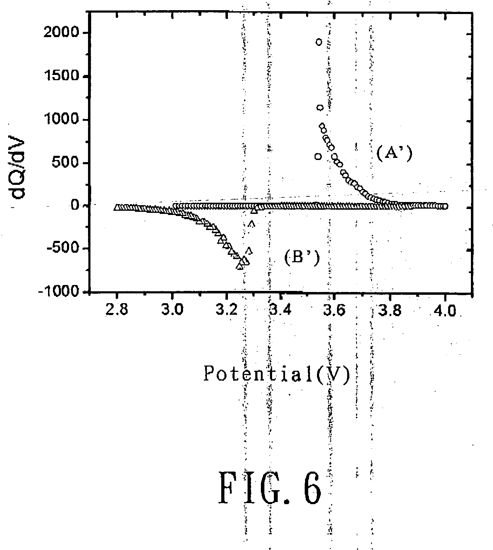

Figs. 5 and 6 show differential capacity (dQ/dV) versus voltage (V) plots of the results of the charge/discharge test performed on cathodes made from the powdery cathode material (LiFePO₄/ZnO/C) of Example 4 in the rechargeable battery and the lithium ferrous phosphate powders of comparative Example 1 in the rechargeable battery, respectively.

From the results shown in Figs. 5 (Example 4) and 6 (comparative Example 1), the charge peak (curve A) and the discharge peak (curve B) of the cathode made from the powdery cathode material of Example 4 are very close to each other and occur at 3.50 V and 3.40 V, respectively, which is an indication of an excellent electrochemical reversibility. On the other hand, the charge peak (curve A') and the discharge peak (curve B') of the cathode made from the lithium ferrous phosphate powders of comparative Example 1 are far from each other and occur at 3.55 V and 3.25 V, respectively, which is an indication of a relatively poor electrochemical reversibility.

### Capacity

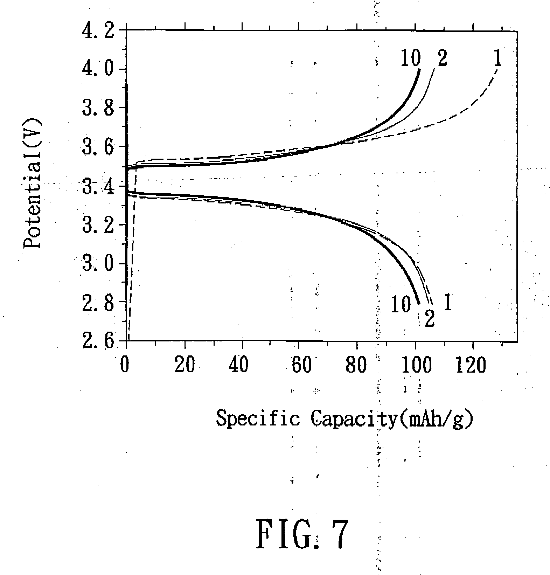

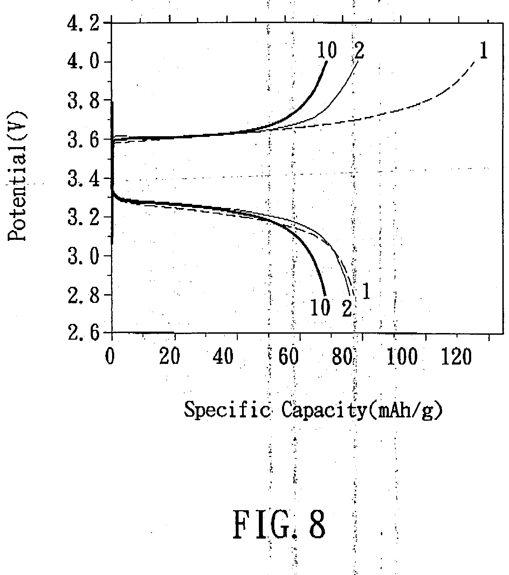

Figs. 7 and 8 show specific capacity versus voltage plots of the results of the charge/discharge test performed on cathodes made from the powdery cathode material (LiFePO₄/ZnAlO_{z/}C) of Example 5 and the lithium ferrous phosphate powders of comparative Example 2, respectively.

From the results shown in Fig.7, the specific capacity of the initial discharge curve (lower curve 1) of the cathode in the rechargeable battery of Example 5 can reach to 105 mAh/g. After ten charge/discharge cycles, the specific capacity of the discharge curve (lower curve 10) of the cathode in the rechargeable battery of Example 5 can reach to 101 mAh/g. However, from the results shown in Fig. 8, the specific capacity of the initial discharge curve (lower curve 1) of the cathode in the rechargeable battery, of comparative Example 2 can reach to 78 mAh/g. After ten charge/discharge cycles, the specific capacity of the discharge curve (lower curve 10) of the cathode in the rechargeable battery of comparative Example 2 can reach to 68 mAh/g. Apparently, inclusion of metal oxide in the cathode material according to this invention will greatly improve the specific capacity of the rechargeable battery.

Note that the fine powders obtained from Example 5 were not heated under a nitrogen atmosphere in the presence of a carbonaceous material. There are residual ferric ions present in the cathode material since heat treatment under a nitrogen atmosphere cannot completely reduce ferric ions to ferrous ions. The presence of residual ferric ions reduces the specific capacity of the rechargeable battery. If the fine powders obtained from Example 5 are heated under a nitrogen atmosphere in the presence of a carbonaceous material, the specific capacity of the rechargeable battery will be further improved.

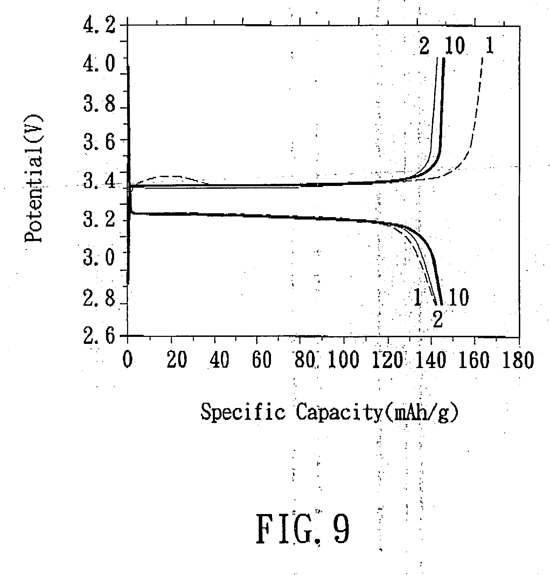

Fig. 9 shows a specific capacity versus voltage plot of the results of the charge/discharge test performed on a cathode made from the powdery cathode material (LiFePO₄/CuO/C) obtained from Example 6.

From the results shown in Fig. 9, the specific capacity of the initial discharge curve (lower curve 1) of the cathode made from the powdery cathode material of Example 6 can reach to 142 mAh/g. After ten charge/discharge cycles, the specific capacity of the discharge curve (lower curve 10) of the cathode made from the powdery cathode material of Example 6 can reach to 145 mAh/g. Therefore, inclusion of metal oxide and the carbonaceous material in the cathode material will greatly improve the specific capacity of the rechargeable battery.

Compared with the conventional methods depicted in the background part, the cathode material according to this invention can be manufactured by a more economical and environmental friendly method, operating conditions of which are easily controlled, and no pollutant is produced.

Furthermore, the cathode material according to this invention can be used to form a cathode, which can be further combined with an anode and an electrolyte to constitute a rechargeable battery. By attaching the metal oxide to the powdery particles of the electrochemical compound, conductivity of the cathode material and diffusion rate of metal ions of the electrochemical compound, such as lithium ions, in the cathode material can be improved. In addition, the cathode made from such cathode material has good electrochemical reversibility, structural stability and themostability and thus, is suitable for use in a rechargeable battery of large current output and in multiple series-parallel rechargeable battery units.

## Claims

1. A cathode material comprising:
an electrochemical compound having one of olivine and NASICON structures and being in the form of powdery particles; and a conductive metal oxide being attached to the powdery particles of said electrochemical compound;
wherein said electrochemical compound has a formula of A₃xM1₂y(P0₄)₃ and said conductive metal oxide has a formula of M2aOb, in which A represents at least one metal element selected from the group consisting of Groups IA, IIA and IIIA and combinations thereof; each of M1 and M2 independently represents at least one metal element selected from the group consisting of Groups IIA and IIIA, transition elements, and combinations thereof; and 0≦x≦1.2, 1.2≦y≦1.8, 0<a5≦7, and 0<b≦12, **characterized in that** said conductive metal oxide is selected from the group consisting of ZnAlO_{z} and copper oxide, in which the subscript z represents the number of oxygen atoms for balancing with valences of zinc and aluminum atoms, said oxide is present in an amount ranging from 0.1 to 5% by weight based on total weight of said cathode material, and said cathode material further comprises a carbonaceous material present in an amount ranging from 0.1 to 5% by weight based on total weight of said cathode material.

2. The cathode material of claim 1, **characterized in that** the element A is at least one selected from the group consisting of Li, Na, K, Be, Mg, B, Al, and combinations thereof, and each of M1 and M2 is independently at least one selected from the group consisting of Sc, Ti, V, Cr, Mn, Fe, Co, Ni, Cu, Zn, Y, Zr, Nb, Mo, Be, Mg, Ca, Sr, B, Al, Ga, In, and combinations thereof.

3. The cathode material of claim 1, **characterized in that** said electrochemical compound is lithium ferrous phosphate.

4. The cathode material of claim 1, **characterized in that** each of the powdery particles of said electrochemical compound is enclosed by a mixture of said conductive metal oxide and said carbonaceous material.

5. A rechargeable battery, including an anode, an electrolyte, and a cathode made from a cathode material, said cathode material comprising:
an electrochemical compound having one of olivine and NASICON structures and being in the form of powdery particles; and a conductive metal oxide being attached to the powdery particles of said electrochemical compound;
wherein said electrochemical compound has a formula of A₃ₓM1_{2y}(PO₄)₃ and said metal oxide has a formula of M2ₐO_{b}, in which A represents at least one metal element selected from the group consisting of Groups IA, IIA and IIIA and combinations thereof; each of M1 and M2 independently represents at least one metal element selected from the group consisting of Groups IIA and IIIA, transition elements, and combinations thereof; and 0≦x≦1.2, 1.2≦y≦1.8, 0<a≦7, and 0<b≦12, **characterized in that** said conductive metal oxide is selected from the group consisting of ZnAlO_{z}, and copper oxide, in which the subscript z represents the number of oxygen atoms for balancing with valences of zinc and aluminum atoms, said oxide is present in an amount ranging from 0.1 to 5% by weight based on total weight of said cathode material, and said cathode material further comprises a carbonaceous material present in an amount ranging from 0.1 to 5% by weight based on total weight of said cathode material..

6. The rechargeable battery of claim 5, **characterized in that** the element A of said electrochemical compound is at least one selected from the group consisting of Li, Na, K, Be, Mg, B, Al, and combinations thereof, and each of M1 and M2 is independently at least one selected from the group consisting of Sc, Ti, V, Cr, Mn, Fe, Co, Ni, Cu, Zn, Y, Zr, Nb, Mo, Be, Mg, Ca, Sr, B, Al, Ga, In, and combinations thereof.

7. The rechargeable battery of claim 5, **characterized in that** each of the powdery particles of said electrochemical compound being enclosed by a mixture of said conductive metal oxide and said carbonaceous material.

## Patentansprüche

1. Kathodenmaterial, das Folgendes umfasst:
eine elektrochemische Verbindung, die eine von Olivin- oder NASICON-Struktur aufweist und in Form von pulverförmigen Partikeln vorliegt; und
ein leitfähiges Metalloxid, das an die pulverförmigen Partikel der elektrochemischen Verbindung gebunden ist; wobei
die elektrochemische Verbindung die Formel A₃ₓM1_{2Y}(P0₄)₃ und das leitfähige Metalloxid die Formel M2ₐO_{b} aufweist, wobei A wenigstens ein Metallelement darstellt, das aus der Gruppe, die die Gruppen IA, IIA und IIIA und Kombinationen von diesen umfasst, ausgewählt ist; M1 und M2 unabhängig voneinander jeweils wenigstens ein Metallelement darstellen, das aus der Gruppe, die die Gruppen IIA und IIIA, Übergangselemente und Kombinationen aus diesen umfasst, ausgewählt ist; und wobei 0≤x≤1,2, 1,2≤y≤1,8, 0<a≤7 und 0<b≤12 gilt, **dadurch gekennzeichnet, dass**
das leitfähige Metalloxid aus der Gruppe, die ZnAlO_{z} und Kupferoxid umfasst, ausgewählt ist, wobei der Index z die Anzahl der Sauerstoffatome zum Ausgleich mit den Valenzen der Zink- und Aluminiumatome darstellt, das Oxid in einer Menge im Bereich von 0,1 bis 5 Gew.-%, bezogen auf das Gesamtgewicht des Kathodenmaterials vorhanden ist, und das Kathodenmaterial ferner ein kohlenstoffhaltiges Material umfasst, das in einer Menge im Bereich von 0,1 bis 5 Gew.-%, bezogen auf das Gesamtgewicht des Kathodenmaterials vorhanden ist.

2. Kathodenmaterial nach Anspruch 1, **dadurch gekennzeichnet, dass** das Element A wenigstens eines ist, das aus der Gruppe, die Li, Na, K, Be, Mg, B, AI und Kombinationen von diesen umfasst, ausgewählt ist, und M1 und M2 jeweils unabhängig voneinander wenigstens eines sind, das aus der Gruppe, die Sc, Ti, V, Cr, Mn, Fe, Co, Ni, Cu, Zn, Y, Zr, Nb, Mo, Be, Mg, Ca, Sr, B, Al, Ga, In und Kombinationen von diesen umfasst, ausgewählt ist.

3. Kathodenmaterial nach Anspruch 1, **dadurch gekennzeichnet, dass** die elektrochemische Verbindung Lithiumeisenphosphat ist.

4. Kathodenmaterial nach Anspruch 1, **dadurch gekennzeichnet, dass** jedes der pulverförmigen Partikel der elektrochemischen Verbindung von einer Mischung aus dem leitfähigen Metalloxid und dem kohlenstoffhaltigen Material umschlossen ist.

5. Wiederaufladbare Batterie, die eine Anode, einen Elektrolyten und eine aus einem Kathodenmaterial hergestellte Kathode umfasst, wobei das Kathodenmaterial Folgendes umfasst:
eine elektrochemische Verbindung, die eine Olivin- oder NASICON-Struktur aufweist und in Form von pulverförmigen Partikeln vorliegt; und
ein leitfähiges Metalloxid, das an den pulverförmigen Partikeln der elektrochemischen Verbindung angelagert ist; wobei
die elektrochemische Verbindung die Formel A₃xM1₂y(PO₄)₃ und das leitfähige Metalloxid die Formel M2ₐO_{b} aufweist, wobei A wenigstens ein Metallelement darstellt, das aus der Gruppe, die die Gruppen IA, IIA und IIIA und Kombinationen aus diesen umfasst, ausgewählt ist; M1 und M2 jeweils unabhängig voneinander wenigstens ein Metallelement darstellen, das aus der Gruppe, die die Gruppen IIA und IIIA, Übergangselemente und Kombinationen aus diesen umfasst, ausgewählt ist; und wobei 0≤x≤1,2, 1,2≤y≤1,8, 0<a≤7 und 0≤b≤12 gilt, **dadurch gekennzeichnet, dass**
das leitfähige Metalloxid aus der Gruppe, die ZnAlO_{z} und Kupferoxid umfasst, ausgewählt ist, wobei der Index z die Anzahl der Sauerstoffatome zum Ausgleich mit den Valenzen der Zink- und Aluminiumatome darstellt, das Oxid in einer Menge im Bereich von 0. 1 bis 5 Gew.-%, bezogen auf das Gesamtgewicht des Kathodenmaterials vorhanden ist, und das Kathodenmaterial ferner ein kohlenstoffhaltiges Material umfasst, das in einer Menge im Bereich von 0,1 bis 5 Gew.-%, bezogen auf das Gesamtgewicht des Kathodenmaterials vorhanden ist.

6. Wiederaufladbare Batterie nach Anspruch 5, **dadurch gekennzeichnet, dass** das Element A der elektrochemischen Verbindung wenigstens eines ist, das aus der Gruppe, die Li, Na, K, Be, Mg, B, Al und Kombinationen aus diesen umfasst, ausgewählt ist, und M1 und M2 jeweils unabhängig voneinander wenigstens eines sind, das aus der Gruppe, die Sc, Ti, V, Cr, Mn, Fe, Co, Ni, Cu, Zn, Y, Zr, Nb, Mo, Be, Mg, Ca, Sr, B, Al, Ga, In und Kombinationen aus diesen umfasst, ausgewählt ist.

7. Wiederaufladbare Batterie nach Anspruch 5, **dadurch gekennzeichnet, dass** jedes der pulverförmigen Partikel der elektrochemischen Verbindung von einer Mischung aus dem leitfähigen Metalloxid und dem kohlenstoffhaltigen Material umschlossen ist.

## Revendications

1. Matériau de cathode comprenant :
un composé électrochimique ayant une structure d'olivine ou une structure de NASICON et se présentant sous la forme de particules de poudre ; et
un oxyde métallique conducteur étant attaché aux particules de poudre dudit composé électrochimique ;
dans lequel ledit composé électrochimique a pour formule A₃xM1_{2y}(P0₄)₃ et ledit oxyde métallique conducteur a pour formule M2aOb, dans lesquelles A représente au moins un élément métallique sélectionné à partir du groupe constitué des Groupes IA, IIA et IIIA et de leurs combinaisons ; chacun de M1 et M2 représente indépendamment au moins un élément métallique sélectionné à partir du groupe constitué des Groupes IIA et IIIA, des éléments de transition, et de leurs combinaisons ; et 0≤x≤1,2 ; 1,2≤y≤1,8 ; 0<a≤7 et 0<b≤12,
ledit matériau de cathode étant **caractérisé en ce que** ledit oxyde métallique conducteur est sélectionné à partir du groupe constitué de ZnAlO_{z} et de l'oxyde de cuivre, où l'indice z représente le nombre d'atomes d'oxygène pour contrebalancer les valences de l'atome de zinc et de l'atome d'aluminium, ledit oxyde est présent en une quantité allant de 0,1 à 5 % en poids sur la base du poids total dudit matériau de cathode, et ledit matériau de cathode comprend en outre un matériau carboné présent en une quantité allant de 0,1 à 5 % en poids sur la base du poids total dudit matériau de cathode.

2. Matériau de cathode selon la revendication 1, **caractérisé en ce que** l'élément A est au moins un sélectionné à partir du groupe constitué de Li, Na, K, Be, Mg, B, Al, et de leurs combinaisons, et chacun de M1 et M2 est indépendamment au moins un sélectionné à partir du groupe constitué de Sc, Ti, V, Cr, Mn, Fe, Co, Ni, Cu, Zn, Y, Zr, Nb, Mo, Be, Mg, Ca, Sr, B, Al, Ga, In, et de leurs combinaisons.

3. Matériau de cathode selon la revendication 1, **caractérisé en ce que** ledit composé électrochimique est du phosphate ferreux de lithium.

4. Matériau de cathode selon la revendication 1, **caractérisé en ce que** chacune des particules de poudre dudit composé électrochimique est entourée par un mélange dudit oxyde métallique conducteur et dudit matériau carboné.

5. Batterie rechargeable, comportant une anode, un électrolyte et une cathode composée d'un matériau de cathode, ledit matériau de cathode comprenant :
un composé électrochimique ayant une structure d'olivine ou une structure de NASICON et se présentant sous la forme de particules de poudre ; et
un oxyde métallique conducteur étant attaché aux particules de poudre dudit composé électrochimique ;
dans laquelle ledit composé électrochimique a pour formule A₃ₓM1_{2y}(PO₄)₃ et ledit oxyde métallique conducteur a pour formule M2ₐOb, dans lesquelles A représente au moins un élément métallique sélectionné à partir du groupe constitué des Groupes IA, IIA et IIIA et de leurs combinaisons ; chacun de M1 et M2 représente indépendamment au moins un élément métallique sélectionné à partir du groupe constitué des Groupes IIA et IIIA, des éléments de transition, et de leurs combinaisons ; et 0≤x≤1,2 ; 1,2≤y≤1,8 ; 0<a≤7 et 0<b≤12,
**caractérisée en ce que** ledit oxyde métallique conducteur est sélectionné à partir du groupe constitué de ZnAlO_{z} et de l'oxyde de cuivre, où l'indice z représente le nombre d'atomes d'oxygène pour contrebalancer les valences de l'atomes de zinc et de l'atome d'aluminium, ledit oxyde est présent en une quantité allant de 0,1 à 5 % en poids sur la base du poids total dudit matériau de cathode, et ledit matériau de cathode comprend en outre un matériau carboné présent en une quantité allant de 0,1 à 5 % en poids sur la base du poids total dudit matériau de cathode.

6. Batterie rechargeable selon la revendication 5, **caractérisée en ce que** l'élément A dudit composé électrochimique est au moins un sélectionné à partir du groupe constitué de Li, Na, K, Be, Mg, B, Al, et de leurs combinaisons, et chacun de M1 et M2 est indépendamment au moins un sélectionné à partir du groupe constitué de Sc, Ti, V, Cr, Mn, Fe, Co, Ni, Cu, Zn, Y, Zr, Nb, Mo, Be, Mg, Ca, Sr, B, Al, Ga, In, et de leurs combinaisons.

7. Batterie rechargeable selon la revendication 5, **caractérisée en ce que** chacune des particules de poudre dudit composé électrochimique est entourée par un mélange dudit oxyde métallique conducteur et dudit matériau carboné.
